# EUROPEAN PATENT APPLICATION

(11) **EP 3 992 247 A1**
(43) Date of publication of application: **04.05.2022**
(21) Application number: 20831500.2
(22) Date of filing: 26.06.2020
(51) Int. Cl.: C08L 69/00, C08L 25/12, C08L 55/02, C08L 77/00, C08L 51/00, C08L 51/06

(54) **THERMOPLASTIC RESIN COMPOSITION AND MOLDED ARTICLE USING SAME**

(30) Priority: 28.06.2019 KR 20190078257
(71) Applicant: Lotte Chemical Corporation, Seoul, 05551 (KR)
(72) Inventor: KIM, Myunghun, Uiwang-si, Gyeonggi-do 16073 (KR); KWON, Keehae, Uiwang-si, Gyeonggi-do 16073 (KR); KIM, Younghyo, Uiwang-si, Gyeonggi-do 16073 (KR)
(74) Representative: Germain Maureau
(86) International application number: PCT/KR2020/008392
(87) International publication number: WO 2020/263031

(57) **Abstract**

The present invention relates to a thermoplastic resin composition and a molded article using same, the thermoplastic resin composition comprising 100 parts by weight of a base resin comprising (A) 65 to 75 wt% of a polycarbonate resin, (B) 10 to 20 wt% of an aromatic vinyl-vinyl cyanide copolymer, and (C) 10 to 20 wt% of an acrylonitrile-butadiene-styrene graft copolymer; (D) 1 to 5 parts by weight of a polyester resin; and (E) 2 to 6 parts by weight of at least one of a polyolefin-aromatic vinyl glycidyl (meth)acrylate graft copolymer and a polyolefin-aromatic vinyl-vinyl cyanide graft copolymer.

## Description

### [Technical Field]

A thermoplastic resin composition and a molded article using the same are disclosed.

### [Background Art]

A polycarbonate resin is one of engineering plastics, and is a material that is widely used in the plastics industry.

The polycarbonate resin has a glass transition temperature (Tg) of about 150 °C due to a bulk molecular structure, such as bisphenol-A, which shows high heat resistance and may be an amorphous polymer having excellent transparency.

Furthermore, although having excellent impact resistance and compatibility with other resins, the polycarbonate resin has a drawback of low fluidity, so it is frequently used in a form of an alloy with various resins for complementing moldability and post-processability.

Among them, a polycarbonate/acrylonitrile-butadiene-styrene copolymer (PC/ABS) alloy has excellent durability, moldability, heat resistance, impact resistance, and the like, and thus may be applied in a wide range of applications such as an electrical/electronic field, an automobile field, a construction field, and other daily life materials, for example, interior/exterior materials for automobiles.

However, when the molded articles using the PC/ABS alloy come into contact with parts made of other resins such as polyethylene, polyvinyl chloride, and the like or other members such as lining sheets or foams made of a chloroprene rubber, a natural rubber, polyester, polyethylene, and the like, friction noises may occur.

Since the styrene-based copolymer included in the PC/ABS alloy exhibits amorphous properties, a friction coefficient may higher than that of materials with crystallinity such as polyethylene, polypropylene, polyacetal, and the like, and accordingly, for example, when fitted with members made of other resins such as an air conditioner vent in a car, a button in a car stereo, and the like, a stick-slip phenomenon may occur due to the high friction coefficient, causing friction noises (squeaking sound).

Recently, as a demand for electric vehicles, which generate relatively less noise than conventional vehicles when driven, increases, the friction noises may occur and thus impair comfort and quietness when riding. Accordingly, there is a need to develop an automotive interior material with excellent friction noise reduction characteristics.

### [Disclosure]

### [Technical Problem]

The present invention provides a thermoplastic resin composition having improved friction noise reduction characteristics, mechanical properties, and chemical resistance, and a molded article using the same.

### [Technical Solution]

According to an embodiment, a thermoplastic resin composition comprises 100 parts by weight of a base resin comprising: (A) 65 to 75 wt% of a polycarbonate resin; (B) 10 to 20 wt% of an aromatic vinyl-vinyl cyanide copolymer; and (C) 10 to 20 wt% of an acrylonitrile-butadiene-styrene graft copolymer, (D) 1 to 5 parts by weight of a polyester resin; and (E) 2 to 6 parts by weight of at least one of a polyolefin-aromatic vinyl-vinyl cyanide graft copolymer and a polyolefin-aromatic vinyl-glycidyl (meth)acrylate graft copolymer.

The (A) polycarbonate resin may have a melt flow index of 10 to 25 g/10 min, which is measured under the condition of 300 °C and a 1.2 kg load according to the ASTM D1238 standard.

The (B) aromatic vinyl-vinyl cyanide copolymer may be a copolymer of a monomer mixture comprising 60 to 80 wt% of an aromatic vinyl compound and 20 to 40 wt% of a vinyl cyanide compound based on 100 wt% of the aromatic vinyl-vinyl cyanide copolymer.

A weight average molecular weight of the (B) aromatic vinyl-vinyl cyanide copolymer may range from 80,000 to 200,000 g/mol.

The (B) aromatic vinyl-vinyl cyanide copolymer may be a styrene-acrylonitrile copolymer.

The (C) acrylonitrile-butadiene-styrene graft copolymer may have a core-shell structure comprising a core composed of a butadiene-based rubbery polymer, and a shell formed by graft polymerization of acrylonitrile and styrene on the core.

The (C) acrylonitrile-butadiene-styrene graft copolymer may comprise 30 to 70 wt% of the core based on 100 wt% of the acrylonitrile-butadiene-styrene graft copolymer.

The (C) acrylonitrile-butadiene-styrene graft copolymer may have an average particle diameter of the rubbery polymer of 200 to 400 nm.

The polyolefin-aromatic vinyl-vinyl cyanide graft copolymer may be one in which a styrene-acrylonitrile copolymer is grafted to a substituted or unsubstituted polyolefin main chain, and the polyolefin-aromatic vinyl-glycidyl (meth)acrylate graft copolymer may be one in which an aromatic vinyl-glycidyl (meth)acrylate copolymer is grafted to a substituted or unsubstituted polyolefin main chain.

The substituted or unsubstituted polyolefin may be at least one selected from polyethylene and an ethylene-vinyl acetate copolymer.

The aromatic vinyl-glycidyl (meth)acrylate copolymer may be a styrene-glycidyl methacrylate copolymer.

The polyolefin-aromatic vinyl-vinyl cyanide graft copolymer may be a polyethylene-styrene-acrylonitrile graft copolymer.

The polyolefin-aromatic vinyl-glycidyl (meth)acrylate graft copolymer may be at least one selected from a polyethylene-styrene-glycidyl methacrylate graft copolymer and an ethylene-vinyl acetate-styrene-glycidyl methacrylate graft copolymer.

The thermoplastic resin composition may further comprise at least one additive selected from a nucleating agent, a coupling agent, filler, a plasticizer, a lubricant, a release agent, an antibacterial agent, a heat stabilizer, an antioxidant, an ultraviolet (UV) stabilizer, a flame retardant, an antistatic agent, an impact modifier, a dye, and a pigment.

Meanwhile, a molded article using a thermoplastic resin composition according to an embodiment may be provided.

### [Advantageous Effects]

The thermoplastic resin composition according to an embodiment and a molded article using the same have improved friction noise reduction characteristics, mechanical properties, and chemical resistance, and thus may be widely applied to molding various products that are painted or unpainted and may also be usefully applied to applications such as interior materials of automobiles, for example, electric vehicles.

### [Description of the Drawings]

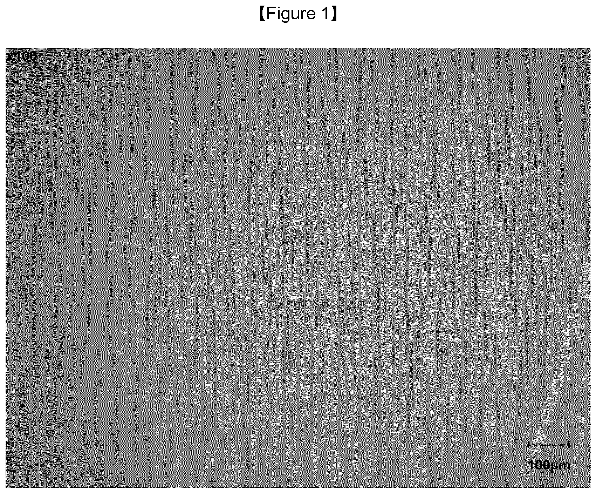

FIG. 1 exhibits cracks generated on the surface of a specimen based on a 100X optical microscope image.

### [Mode for Invention]

Hereinafter, embodiments of the present invention are described in detail. However, these embodiments are exemplary, the present invention is not limited thereto, and the present invention is defined by the scope of claims.

In the present invention, unless otherwise mentioned, the average particle diameter refers to a volume average diameter, and means a Z-average particle diameter measured using a dynamic light scattering analyzer.

According to an embodiment, a thermoplastic resin composition comprises 100 parts by weight of a base resin comprising: (A) 65 to 75 wt% of a polycarbonate resin; (B) 10 to 20 wt% of an aromatic vinyl-vinyl cyanide copolymer; and (C) 10 to 20 wt% of an acrylonitrile-butadiene-styrene graft copolymer; (D) 1 to 5 parts by weight of a polyester resin; and (E) 2 to 6 parts by weight of at least one of a polyolefin-aromatic vinyl glycidyl (meth)acrylate graft copolymer and a polyolefin-aromatic vinyl-vinyl cyanide graft copolymer.

Hereinafter, each component included in the thermoplastic resin composition will be described in detail.

### (A) Polycarbonate Resin

The polycarbonate resin is a polyester having a carbonate bond but has no particular limit in its type, and may include any polycarbonate resin usable in the resin composition field.

For example, it may be prepared by reacting diphenols represented by Chemical Formula 1 with a compound selected from phosgene, halogen acid esters, carbonate esters, and a combination thereof.

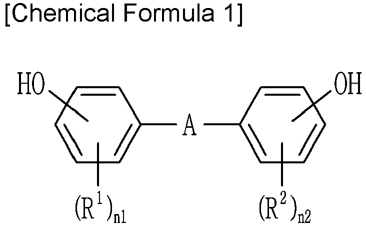

In Chemical Formula 1,
A is a linking group selected from a single bond, a substituted or unsubstituted C1 to C30 alkylene group, a substituted or unsubstituted C2 to C5 alkenylene group, a substituted or unsubstituted C2 to C5 alkylidene group, a substituted or unsubstituted C1 to C30 haloalkylene group, a substituted or unsubstituted C5 to C6 cycloalkylene group, a substituted or unsubstituted C5 to C6 cycloalkenylene group, a substituted or unsubstituted C5 to C10 cycloalkylidene group, a substituted or unsubstituted C6 to C30 arylene group, a substituted or unsubstituted C1 to C20 alkoxylene group, a halogenic acid ester group, a carbonate ester group, CO, S, and SO₂, and R¹ and R² are each independently a substituted or unsubstituted C1 to C30 alkyl group or a substituted or unsubstituted C6 to C30 aryl group, and n1 and n2 are each independently an integer of 0 to 4.

Two or more types of the diphenols represented by Chemical Formula 1 may be combined to constitute a repeating unit of the polycarbonate resin.

Specific examples of the diphenols may be hydroquinone, resorcinol, 4,4'-dihydroxydiphenyl, 2,2-bis(4-hydroxyphenyl)propane (also referred to as "bisphenol-A"), 2,4-bis(4-hydroxyphenyl)-2-methylbutane, bis(4-hydroxyphenyl)methane, 1,1-bis(4-hydroxyphenyl)cyclohexane, 2,2-bis(3-chloro-4-hydroxyphenyl)propane, 2,2-bis(3-methyl-4-hydroxyphenyl)propane, 2,2-bis(3,5-dimethyl-4-hydroxyphenyl)propane, 2,2-bis(3,5-dichloro-4-hydroxyphenyl)propane, 2,2-bis(3,5-dibromo-4-hydroxyphenyl)propane, bis(4-hydroxyphenyl)sulfoxide, bis(4-hydroxyphenyl)ketone, bis(4-hydroxyphenyl)ether, and the like. Among the diphenols, 2,2-bis(4-hydroxyphenyl) propane, 2,2-bis(3-methyl-4-hydroxyphenyl) propane, 2,2-bis(3,5-dimethyl-4-hydroxyphenyl) propane, 2,2-bis(3,5-dichloro-4-hydroxyphenyl) propane, or 1,1-bis(4-hydroxyphenyl) cyclohexane may be desirably used. 2,2-bis(4-hydroxyphenyl) propane may be more desirably used.

The polycarbonate resin may be a mixture of copolymers obtained using two or more dipenols.

In addition, the polycarbonate resin may be a linear polycarbonate resin, a branched polycarbonate resin, a polyester carbonate copolymer resin, and the like.

Specific examples of the linear polycarbonate resin may be a bisphenol-A polycarbonate resin. Specific examples of the branched polycarbonate resin may be a resin prepared by reacting a multi-functional aromatic compound such as trimellitic anhydride, trimellitic acid, and the like with diphenols and a carbonate. The polyestercarbonate copolymer resin may be prepared by reacting bifunctional carboxylic acid with diphenols and a carbonate, wherein the used carbonate is a diaryl carbonate such as diphenyl carbonate or ethylene carbonate.

The polycarbonate resin may have a weight average molecular weight of 10,000 to 200,000 g/mol, for example, 14,000 to 40,000 g/mol. When the weight average molecular weight of the polycarbonate resin is within the above range, a molded article using the same may obtain excellent impact resistance and fluidity.

The polycarbonate resin may be included in an amount of 65 to 75 wt%, for example, may be included in an amount of 68 to 73 wt% based on 100 wt% of the base resin. When the weight average molecular weight of the polycarbonate resin is within the above range, a molded article using the same may obtain excellent moldability.

The polycarbonate resin may have a melt flow index of 10 to 25 g/10 min, for example 15 to 25 g/10 min, for example 15 to 20 g/10 min, which is measured under the condition of 300 °C and a 1.2 kg load according to ASTM D1238. When the polycarbonate resin having a melt flow index within the above range is used, a molded article using the same may exhibit excellent impact resistance and fluidity.

However, an embodiment is not necessarily limited thereto. For example, the polycarbonate resin may be used by mixing two or more types of polycarbonate resins having different weight average molecular weights or melt flow indexes. By mixing and using polycarbonate resins of different weight average molecular weights or melt flow indexes, the thermoplastic resin composition may be controlled to have desired fluidity.

### (B) Aromatic Vinyl-Vinyl Cyanide Copolymer

In an embodiment, the aromatic vinyl-vinyl cyanide copolymer may function to improve the fluidity of the thermoplastic resin composition and compatibility among the components at a predetermined level.

In an embodiment, the aromatic vinyl-vinyl cyanide copolymer may have a weight average molecular weight of 80,000 to 200,000 g/mol, for example 80,000 to 150,000 g/mol.

In the present invention, the weight average molecular weight is obtained by dissolving a powder sample in tetrahydrofuran (THF) and performing gel permeation chromatography (GPC) with a 1200 series made by Agilent Technologies Inc. (a column: LF-804 made by Shodex, a standard sample: polystyrene made by Shodex).

The aromatic vinyl compound may be at least one selected from styrene, α-methylstyrene, p-methylstyrene, p-t-butylstyrene, 2,4-dimethylstyrene, chlorostyrene, vinyltoluene, and vinylnaphthalene.

The vinyl cyanide compound may be at least one selected from acrylonitrile, methacrylonitrile, and fumaronitrile.

In an embodiment, the aromatic vinyl-vinyl cyanide copolymer may be a copolymer of a monomer mixture of an aromatic vinyl compound and a vinyl cyanide compound.

Herein, the aromatic vinyl compound may be included, for example, in an amount of greater than or equal to 60 wt%, for example, greater than or equal to 65 wt%, for example, greater than or equal to 70 wt%, for example, less than or equal to 80 wt%, for example, less than or equal to 75 wt%, for example, 60 to 80 wt%, for example, 65 to 75 wt%, based on 100 wt% of the aromatic vinyl-vinyl cyanide copolymer.

In addition, the vinyl cyanide compound may be included, for example, in an amount of greater than or equal to 20 wt%, for example, greater than or equal to 25 wt%, for example, less than or equal to 40 wt%, for example, less than or equal to 35 wt%, for example, 20 to 40 wt%, for example, 25 to 35 wt%, based on 100 wt% of the aromatic vinyl-vinyl cyanide copolymer.

In an embodiment, the aromatic vinyl-vinyl cyanide copolymer may be a styrene-acrylonitrile copolymer (SAN).

In an embodiment, the aromatic vinyl-vinyl cyanide copolymer may be included in an amount of 10 to 20 wt%, for example 12 to 18 wt% based on 100 wt% of the base resin.

When the aromatic vinyl-vinyl cyanide copolymer is included in an amount of less than 10 wt%, moldability of the thermoplastic resin composition may be deteriorated, and when included in an amount of greater than 20 wt%, mechanical properties of a molded article made by using the thermoplastic resin composition may be deteriorated.

### (C) Acrylonitrile-Butadiene-Styrene Graft Copolymer

In an embodiment, the acrylonitrile-butadiene-styrene graft copolymer imparts excellent mechanical properties (e.g., impact resistance and the like) to the thermoplastic resin composition. In an embodiment, the acrylonitrile-butadiene-styrene graft copolymer may have a core-shell structure of a core formed of a butadiene-based rubbery polymer component and a shell formed by graft-polymerizing acrylonitrile and styrene to the core.

The rubbery polymer component forming the core improves impact resistance particularly at a low temperature, and the shell component may lower interfacial tension and thus improve adhesion on the interface.

The acrylonitrile-butadiene-styrene graft copolymer according to an embodiment may be prepared by adding the styrene and the acrylonitrile to the butadiene-based rubbery polymer and then performing graft-copolymerization through conventional polymerization such as emulsion polymerization, bulk polymerization, and the like.

The butadiene-based rubbery polymer may be selected from a butadiene rubbery polymer, a butadiene-styrene rubbery polymer, a butadiene-acrylonitrile rubbery polymer, a butadiene-acrylate rubbery polymer, and a mixture thereof.

In the acrylonitrile-butadiene-styrene graft copolymer, the butadiene-based rubbery polymer may have an average particle diameter of 200 to 400 nm, for example, 200 to 350 nm, for example, 250 to 350 nm. When the average particle diameter is within the ranges, the thermoplastic resin composition may secure excellent impact resistance and appearance characteristics.

Based on 100 wt% of the acrylonitrile-butadiene-styrene graft copolymer, the butadiene-based rubbery polymer core may be included in an amount of 30 to 70 wt%. Meanwhile, the shell may be a styrene-acrylonitrile copolymer copolymerized from a monomer mixture in which the weight ratio of the styrene and the acrylonitrile is 6:4 to 8:2.

The acrylonitrile-butadiene-styrene graft copolymer may be included in an amount of 10 to 20 wt%, for example 12 to 18 wt%, based on 100 wt% of the base resin.

When the acrylonitrile-butadiene-styrene graft copolymer is included in an amount of less than 10 wt% in the base resin, excellent impact resistance may be difficult to accomplish, but when the acrylonitrile-butadiene-styrene graft copolymer is included in an amount of greater than 20 wt%, heat resistance and fluidity may be deteriorated.

### (D) Polyester Resin

In an embodiment, the polyester resin imparts excellent chemical resistance to the thermoplastic resin composition. Accordingly, the thermoplastic resin composition according to an embodiment may realize excellent chemical resistance due to the polyester resin as well as exhibit excellent friction noise-reducing characteristics.

In an embodiment, the polyester resin is an aromatic polyester resin and may be polycondensed from terephthalic acid or terephthalic acid alkyl ester and a glycol component having 2 to 10 carbon atoms. Herein, the alkyl means C1 to C10 alkyl.

Specifically, the polyester resin according to an embodiment of the present invention may be obtained by polycondensing an acidic component such as terephthalic acid (TPA), isophthalic acid (IPA), 1,2-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, 2,7-naphthalenedicarboxylic acid, and the like, aromatic dicarboxylate in which acid is substituted with a dimethyl group, for example, dimethyl terephthalate (hereinafter, DMT), dimethyl isophthalate, an alkylester of naphthalene dicarboxylic acid or dimethyl-1 ,2-naphthalate, dimethyl-1,5-naphthalate, dimethyl-1,7-naphthalate, dimethyl-1,8-naphthalate, dimethyl-2,3-naphthalate, dimethyl-2,6-naphthalate, dimethyl-2,7-naphthalate, or a mixture thereof, and a diol component such as a C2 to C12 ethylene glycol, 1,2-propylene glycol, 1,3-propylene glycol, 2,2-dimethyl-1,3-propanediol, 2,2-dimethyl-1,3-propylene glycol, 1,3-butanediol, 1,4-butanediol, 1,5-pentanediol, 1,6-hexanediol, or a mixture thereof.

Examples of the aromatic polyester resin may comprise a polyethylene terephthalate resin, a polyethylene terephthalate glycol resin, a polytrimethylene terephthalate resin, a polybutylene terephthalate resin, a polyhexamethylene terephthalate resin, a polycyclohexane dimethylene terephthalate resin, or polyester resins modified to be amorphous by mixing these resins with some other monomers.

The polyester resin may be included in an amount of 1 to 5 parts by weight, for example, 1 to 4 parts by weight, for example, 2 to 4 parts by weight, for example, 2 to 3 parts by weight, based on 100 parts by weight of the base resin. In the thermoplastic resin composition, when the polyester resin is included in an amount of less than 1 part by weight, chemical resistance of the thermoplastic resin composition and a molded article using the same may be greatly deteriorated, but when the polyester resin is included in an amount of greater than 2 parts by weight, heat resistance and impact resistance of the thermoplastic resin composition and the molded article using the same may be deteriorated.

### (E) Polyolefin-Aromatic Vinyl-Vinyl Cyanide Graft Copolymer and/or Polyolefin-Aromatic Vinyl-Glycidyl (meth)acrylate Graft Copolymer

In an embodiment, the polyolefin-aromatic vinyl-vinyl cyanide graft copolymer and/or the polyolefin-aromatic vinyl-glycidyl (meth)acrylate graft copolymer may lower a friction coefficient of the thermoplastic resin composition and a molded article made by using the same, and also improve friction noise-reducing durability and thus exhibit excellent friction noise reduction characteristics.

In an embodiment, the polyolefin-aromatic vinyl-vinyl cyanide graft copolymer may be one in which a styrene-acrylonitrile copolymer is grafted to a substituted or unsubstituted polyolefin main chain and the polyolefin-aromatic vinyl-glycidyl (meth)acrylate graft copolymer may be one in which an aromatic vinyl-glycidyl (meth)acrylate copolymer is grafted to a substituted or unsubstituted polyolefin main chain.

The substituted or unsubstituted polyolefin for constituting the polyolefin-aromatic vinyl-vinyl cyanide graft copolymer and/or the polyolefin-aromatic vinyl-glycidyl (meth)acrylate graft copolymer may be at least one selected from polyethylene and an ethylene-vinyl acetate copolymer.

The substituted or unsubstituted polyolefin may be at least one selected from polyethylene and an ethylene-vinyl acetate copolymer. The ethylene-vinyl acetate copolymer may be a copolymer formed of an ethylene monomer and a vinyl acetate monomer.

For example, the polyolefin-aromatic vinyl-vinyl cyanide graft copolymer may be a polyethylene-styrene-acrylonitrile graft copolymer (PE-g-SAN). Herein, the styrene-acrylonitrile copolymer forming the graft copolymerization with the polyolefin may be a copolymer of a monomer mixture comprising 50 to 95 wt% of styrene and 5 to 50 wt% of acrylonitrile.

In an embodiment, the polyolefin-aromatic vinyl-vinyl cyanide graft copolymer may comprise 40 to 90 wt% of the substituted or unsubstituted polyolefin and 10 to 60 wt% of the aromatic vinyl-vinyl cyanide copolymer based on 100 wt% of the polyolefin-aromatic vinyl-vinyl cyanide graft copolymer.

On the other hand, the aromatic vinyl-glycidyl (meth)acrylate copolymer grafted to the polyolefin main chain may be a copolymer of an aromatic vinyl monomer and a glycidyl (meth)acrylate monomer.

The aromatic vinyl compound may be one or more selected from styrene, C1 to C10 alkyl-substituted styrene, halogen-substituted styrene, vinyl toluene, vinyl naphthalene, and a mixture thereof. Specific examples of the alkyl-substituted styrene may be α-methylstyrene, p-methylstyrene, o-ethylstyrene, methylstyrene, p-ethylstyrene, p-t-butylstyrene, 2,4-dimethylstyrene, and the like.

The glycidyl (meth)acrylate monomer may be one or more selected from glycidyl acrylate, glycidyl methacrylate, and a mixture thereof.

The aromatic vinyl-glycidyl (meth)acrylate copolymer may be, for example, a copolymer of styrene and glycidyl acrylate, a copolymer of styrene and glycidyl methacrylate, a copolymer of α-methylstyrene and glycidyl acrylate, a copolymer of α-methylstyrene and glycidyl methacrylate, a copolymer of styrene, α-methylstyrene, and glycidyl acrylate, a copolymer of styrene, α-methylstyrene, and glycidyl methacrylate, or a copolymer of styrene, α-methylstyrene, glycidyl acrylate, and glycidyl methacrylate, and desirably a styrene-glycidyl methacrylate copolymer. Herein, the styrene-glycidyl methacrylate copolymer may be a copolymer of a monomer mixture comprising 50 to 95 wt% of styrene and 5 to 50 wt% of glycidyl methacrylate.

For example, the polyolefin-aromatic vinyl-glycidyl (meth)acrylate graft copolymer may be at least one selected from a polyethylene-styrene-glycidyl methacrylate graft copolymer (PE-g-SGMA) and an ethylene-vinyl acetate-styrene-glycidyl methacrylate graft copolymer (EVA-g-SGMA).

In an embodiment, the polyolefin-aromatic vinyl-glycidyl (meth)acrylate graft copolymer may comprise 70 to 95 wt% of the substituted or unsubstituted polyolefin and 5 to 30 wt% of the aromatic vinyl-glycidyl (meth)acrylate copolymer based on 100 wt% of the polyolefin-aromatic vinyl-glycidyl (meth)acrylate graft copolymer.

At least one of the polyolefin-aromatic vinyl-vinyl cyanide graft copolymer and the polyolefin-aromatic vinyl-glycidyl (meth)acrylate graft copolymer may be included, for example, in an amount of 2 to 6 parts by weight based on 100 parts by weight of the base resin. When the polyolefin-aromatic vinyl-vinyl cyanide graft copolymer and/or polyolefin-aromatic vinyl-glycidyl (meth)acrylate graft copolymer are included in an amount of less than 2 parts by weight, the friction noise reduction characteristics of a molded article made by using the same may hardly be exhibited, and when included in an amount of greater than 6 parts by weight, mechanical properties such as rigidity and the like may be deteriorated.

### (F) Other Additives

In addition to the components (A) to (E), the thermoplastic resin composition according to an embodiment may further comprise one or more additives required in order to balance physical properties under conditions that maintain excellent friction noise reduction characteristics, mechanical properties, and chemical resistance, or are required according to final uses of the thermoplastic resin composition.

Specifically, the additives may comprise a nucleating agent, a coupling agent, filler, a plasticizer, a lubricant, a release agent, an antibacterial agent, a heat stabilizer, an antioxidant, an ultraviolet (UV) stabilizer, a flame retardant, an antistatic agent, an impact modifier, a dye, a pigment, and the like, and these may be used alone or in a combination of two or more.

These additives may be appropriately included within a range that does not impair the physical properties of the thermoplastic resin composition, and specifically, may be included in an amount of less than or equal to 20 parts by weight based on 100 parts by weight of the base resin, but are not limited thereto.

The thermoplastic resin composition according to the present invention may be prepared by a known method for preparing a thermoplastic resin composition.

For example, the thermoplastic resin composition according to the present invention may be prepared in the form of pellets by simultaneously mixing the components of the present invention and other additives and then melt-kneading the same in an extruder.

A molded article according to an embodiment of the present invention may be manufactured from the aforementioned thermoplastic resin composition.

In an embodiment, when measured according to the German Automobile Industry Association standard of VDA230-206, the molded article exhibits RPN 1 to 3 at room temperature, that is, generates almost no squeak noise, and when allowed to stand for about 300 hours in an 80 °C oven, exhibits RPN 1 to 4 and thus may achieve excellent friction noise reduction characteristics.

Specific evaluation methods and results of the squeak noise are illustrated later in experimental examples.

In an embodiment, the molded article may have a notched Izod impact strength of at least 40 kJ/m², for example, greater than or equal to 41 kJ/m², for example, greater than or equal to 42 kJ/m², when measured according to ISO 180.

In an embodiment, the molded article may have tensile strength of at least 50 MPa or higher, when measured according to ISO 527-1, and a flexural modulus of at least 2,000 MPa or more, when measured according to ISO 178.

In an embodiment, when the molded article is molded into an ASTM D638 Type I specimen, installed in a jig with a critical strain of 1 %, and after applying an automobile air freshener (Febreze) on the specimen surface, allowed to stand at room temperature for 168 hours, cracks generated on the specimen surface may have a width of 10 µm or less, for example, 9 µm or less, for example, 8 µm or less.

In this way, the thermoplastic resin composition exhibits excellent friction noise-reducing characteristics, mechanical properties, and chemical resistance and thus may be widely applied to various products, and particularly, since a stick-slip phenomenon is minimized, the thermoplastic resin composition may be usefully applied to interior materials and the like of automobiles, for example, electric vehicles in which the friction noise reduction is greatly required.

Hereinafter, the present invention is illustrated in more detail with reference to examples and comparative examples. However, the following examples and comparative examples are provided for the purpose of descriptions and the present invention is not limited thereto.

### Examples 1 to 4 and Comparative Examples 1 to 5

The thermoplastic resin compositions of Examples 1 to 4 and Comparative Examples 1 to 5 were prepared according to the component content ratios shown in Table 1.

In Table 1, (A), (B), and (C), which are included in the base resin, are expressed in weight percent (wt%) based on the total weight of the base resin, and (D), (E) [(E-1), (E-2)], and (E'), which are added to the base resin, are expressed in parts by weight based on 100 parts by weight of the base resin.

The components shown in Table 1 were dry-mixed, and quantitatively and continuously put into the feeding section (barrel temperature: 250 °C) of a twin-screw extruder (L/D = 36, Φ = 45 mm), and melted/kneaded. Subsequently, after drying the thermoplastic resin compositions that were pelletized through a twin-screw extruder at about 80 °C for about 4 hours, specimens for measuring physical properties and specimens for squeak noise evaluation of 100 mm x 50 mm x 2 mm (width x length x thickness) were produced, respectively, using a 6 oz injection molding machine set to a cylinder temperature of about 260 °C and a mold temperature of about 60 °C.

**[Table 1]**

| | | Ex. 1 | Ex. 2 | Ex. 3 | Ex. 4 | Comp. Ex. 1 | Comp. Ex. 2 | Comp. Ex. 3 | Comp. Ex. 4 | Comp. Ex. 5 |
|---|---|---|---|---|---|---|---|---|---|---|
| Base resin | (A) | 70 | 70 | 70 | 70 | 70 | 70 | 70 | 70 | 70 |
| | (B) | 15 | 15 | 15 | 15 | 15 | 15 | 15 | 15 | 15 |
| | (C) | 15 | 15 | 15 | 15 | 15 | 15 | 15 | 15 | 15 |
| (D) | | 2 | 2 | 2 | 2 | 2 | 2 | 1 | 0 | 8 |
| (E) | (E-1) | 3 | 5 | 0 | 0 | 0 | 0 | 0 | 0 | 0 |
| | (E-2) | 0 | 0 | 3 | 5 | 0 | 0 | 0 | 5 | 5 |
| (E') | | 0 | 0 | 0 | 0 | 0 | 3 | 0 | 0 | 0 |

Descriptions of each component in Table 1 are as follows.

### (A) Polycarbonate Resin

A polycarbonate resin (Lotte Advanced Materials Co., Ltd.) having a melt flow index of 6 g/10 min measured under the condition of 300 °C and a 1.2 kg load according to the ASTM D1238 standard.

### (B) Aromatic Vinyl-Vinyl Cyanide Copolymer

A styrene-acrylonitrile copolymer (Lotte Advanced Materials Co., Ltd.) copolymerized from a monomer mixture of about 28 wt% of acrylonitrile and about 72 wt% of styrene and having a weight average molecular weight of about 100,000 g/mol.

### (C) Acrylonitrile-Butadiene-Styrene Graft Copolymer

An acrylonitrile-butadiene-styrene graft copolymer (Lotte Advanced Materials Co., Ltd.) in which a styrene-acrylonitrile copolymer having a styrene:acrylonitrile weight ratio of about 71:29 forms a shell on a core (average particle diameter: about 300 nm) composed of about 45 wt% of a butadiene rubbery polymer.

### (D) Polyester Resin

A polybutylene terephthalate resin (Shinkong Synthetic Fibers Corp., DHK 011) having an intrinsic viscosity of about 1.20 dl/g measured according to ASTM D2857.

### (E-1) Polyolefin-Aromatic Vinyl-Vinyl Cyanide Graft Copolymer

A copolymer (PE-g-SAN, NOF Corporation, MODIPER^{®} A1401) in which a styrene-acrylonitrile copolymer is grafted to a polyethylene main chain.

### (E-2) Polyolefin-Aromatic Vinyl-Glycidyl (meth)acrylate Graft Copolymer

A polyethylene-styrene-glycidyl methacrylate graft copolymer (PE-g-SGMA, NOF Corporation, MODIPER^{®} AS100) in which a styrene-glycidyl methacrylate copolymer is grafted to a polyethylene main chain.

### (E') Dimethylpolysiloxane

Dimethylpolysiloxane (Shin-Etsu Chemical, KF-96) having a kinematic viscosity of about 100 cSt at 25 °C.

### Experimental Examples

The experimental results are shown in Table 3.
(1) Squeak Noise: Squeak noises of the specimens for evaluating corresponding to the following Condition 1 (a room temperature condition) and the following Condition 2 (a severe condition) were measured according to VDA230-206.
- Condition 1 (room temperature condition): The specimens were allowed to stand at room temperature without a separate heat treatment.
- Condition 2 (severe condition): The specimens were allowed to stand in an about 80 °C oven for about 300 hours.
The following Figure is a schematic view of the basic principle of VDA230-206. Referring to the following Figure, Material A and Material B were identical materials which were heat-treated under the same conditions, but Material A having a mobile phase relatively moved to Material B due to spring components. A force (F_{N}) applied to the materials due to the spring components was 40 N, a moving speed (Vₛ) of a sliding carriage was 4 mm/s, and a contact area of the two material specimens was 1,250 mm². Herein, a movement phenomenon of the spring was caused by stick and slip, which was used to evaluate the squeak noises. 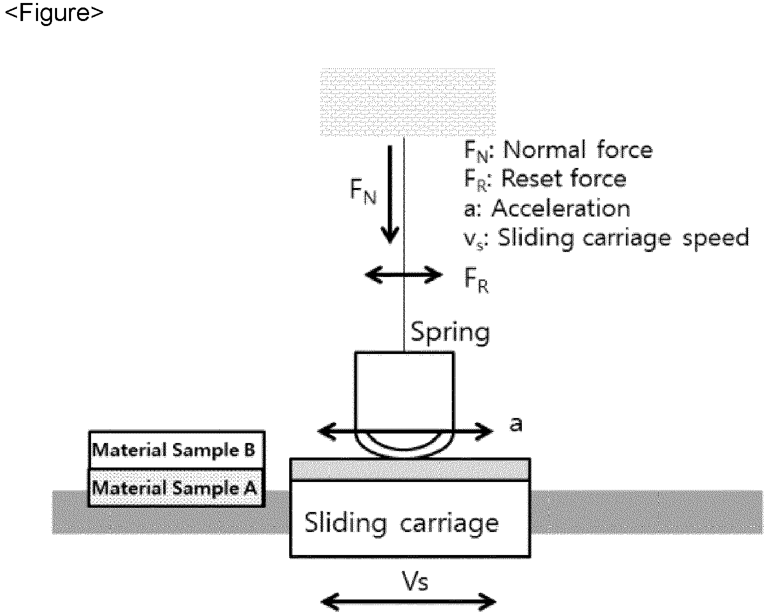 Table 2 shows references for evaluating the squeak noises, wherein as RPN is closer to 1, friction noise reduction characteristics are more excellent.

**[Table 2]**

| RPN | Rating | Meaning |
|---|---|---|
| 1 | OK | Material pair is safe. Audible noise development due to the stick-slip effect is not expected |
| 2 | OK | |
| 3 | OK | |
| 4 | Conditionally OK | Material pair is at threshold. Audible interference cannot be eliminated from the stick-slip effect |
| 5 | Conditionally OK | |
| 6 | Not okay | Material pair is critical with regard to stick-slip effect. Audible noises during relative movements must be expected |
| 7 | Not okay | |
| 8 | Not okay | |
| 9 | Not okay | |
| 10 | Not okay | |

Referring to Table 2, RPNs 1 to 3 indicate a state that there are almost no noises, and RPNs 4 and 5 indicate a limit point where the squeak noises are not removed by the stick-slip effect. In addition, RPNs 6 to 10 indicate a state that the stick-slip effect is obviously expressed.
(2) Tensile Strength (unit: MPa): According to ISO 527-1, the tensile strength of the specimens are measured.
(3) Flexural Modulus (unit: MPa): According to ISO 178, the flexural modulus of the specimens are measured.
(4) Impact Resistance (unit: kJ/m²): According to ISO 180, the notched impact strength of the specimens are measured.
(5) Chemical resistance (unit: µm): After installing an ASTM D638 Type I specimen in a jig with a critical strain of 1 %, applying an automobile air freshener (Febreze) on the surface of the specimen, and allowing it to stand at room temperature for 168 hours, a maximum crack width on the specimen is measured.
FIG. 1 shows cracks generated on the surface of the specimens based on 100X optical microscope image.
(6) Heat Resistance (°C): According to ASTM D648, a heat deflection temperature (HDT) is measured under a load condition of 18.5 kg.

**[Table 3]**

| | | Ex. 1 | Ex. 2 | Ex. 3 | Ex. 4 | Comp. Ex. 1 | Comp. Ex. 2 | Comp. Ex. 3 | Comp. Ex. 4 | Comp. Ex. 5 |
|---|---|---|---|---|---|---|---|---|---|---|
| Squeak noise (RPN) | Condition 1 | 3 | 2 | 2 | 1 | 6 | 8 | 6 | 2 | 2 |
| | Condition 2 | 4 | 3 | 3 | 2 | 10 | 10 | 10 | 2 | 2 |
| Tensile strength (MPa) | | 53 | 52 | 52 | 51 | 55 | 48 | 55 | 51 | 51 |
| Flexural modulus (MPa) | | 2,200 | 2,100 | 2,100 | 2,000 | 2,300 | 2,100 | 2,350 | 2,000 | 2,000 |
| Impact resistance (kJ/m²) | | 48 | 45 | 47 | 43 | 50 | 52 | 54 | 45 | 35 |
| Chemical resistance (µm) | | 10 | 9 | 9 | 8 | 10 | 8 | 15 | 15 | 6 |
| Heat resistance (°C) | | 112 | 111 | 112 | 111 | 115 | 108 | 116 | 112 | 100 |

Referring to Tables 1 and 3, as shown in Examples 1 to 4, compared with the comparative examples, a thermoplastic resin composition exhibiting excellent friction noise reduction characteristics, mechanical properties (impact resistance and rigidity), and chemical resistance, and a molded article using the same, may be provided by using the components according to an embodiment in optimal contents.

As described above, the present invention has been described through preferred embodiments, but a person having ordinary skill would understand easily that the present invention is not limited thereto, and various modifications and variations may be possible without departing from the concept and scope of the following claims.

## Claims

1. A thermoplastic resin composition, comprising
100 parts by weight of a base resin comprising:
(A) 65 to 75 wt% of a polycarbonate resin;
(B) 10 to 20 wt% of an aromatic vinyl-vinyl cyanide copolymer; and
(C) 10 to 20 wt% of an acrylonitrile-butadiene-styrene graft copolymer;
(D) 1 to 5 parts by weight of a polyester resin; and
(E) 2 to 6 parts by weight of at least one of a polyolefin-aromatic vinyl-vinyl cyanide graft copolymer and a polyolefin-aromatic vinyl-glycidyl (meth)acrylate graft copolymer.

2. The thermoplastic resin composition of claim 1, wherein the (A) polycarbonate resin has a melt flow index of 10 to 25 g/10 min, which is measured under the condition of 300 °C and a 1.2 kg load according to the ASTM D1238 standard.

3. The thermoplastic resin composition of claim 1 or claim 2, wherein the (B) aromatic vinyl-vinyl cyanide copolymer is a copolymer of a monomer mixture comprising 60 to 80 wt% of an aromatic vinyl compound and 20 to 40 wt% of a vinyl cyanide compound based on 100 wt% of the aromatic vinyl-vinyl cyanide copolymer.

4. The thermoplastic resin composition of any one of claim 1 to claim 3, wherein a weight average molecular weight of the (B) aromatic vinyl-vinyl cyanide copolymer ranges from 80,000 to 200,000 g/mol.

5. The thermoplastic resin composition of any one of claim 1 to claim 4, wherein the (B) aromatic vinyl-vinyl cyanide copolymer is a styrene-acrylonitrile copolymer.

6. The thermoplastic resin composition of any one of claim 1 to claim 5, wherein
the (C) acrylonitrile-butadiene-styrene graft copolymer has a core-shell structure comprising
a core composed of a butadiene-based rubbery polymer, and
a shell formed by graft polymerization of acrylonitrile and styrene on the core.

7. The thermoplastic resin composition of claim 6, wherein the (C) acrylonitrile-butadiene-styrene graft copolymer comprises 30 to 70 wt% of the core based on 100 wt% of the acrylonitrile-butadiene-styrene graft copolymer.

8. The thermoplastic resin composition of any one of claim 1 to claim 7, wherein the (C) acrylonitrile-butadiene-styrene graft copolymer has an average particle diameter of the rubbery polymer of 200 to 400 nm.

9. The thermoplastic resin composition of any one of claim 1 to claim 8, wherein
the polyolefin-aromatic vinyl-vinyl cyanide graft copolymer is one in which a styrene-acrylonitrile copolymer is grafted to a substituted or unsubstituted polyolefin main chain, and
the polyolefin-aromatic vinyl-glycidyl (meth)acrylate graft copolymer is one in which an aromatic vinyl-glycidyl (meth)acrylate copolymer is grafted to a substituted or unsubstituted polyolefin main chain.

10. The thermoplastic resin composition of claim 9, wherein the substituted or unsubstituted polyolefin is at least one selected from polyethylene and an ethylene-vinyl acetate copolymer.

11. The thermoplastic resin composition of claim 9 or claim 10, wherein the aromatic vinyl-glycidyl (meth)acrylate copolymer is a styrene-glycidyl methacrylate copolymer.

12. The thermoplastic resin composition of any one of claim 1 to claim 11, wherein the polyolefin-aromatic vinyl-vinyl cyanide graft copolymer is a polyethylene-styrene-acrylonitrile graft copolymer.

13. The thermoplastic resin composition of any one of claim 1 to claim 12, wherein the polyolefin-aromatic vinyl-glycidyl (meth)acrylate graft copolymer is at least one selected from a polyethylene-styrene-glycidyl methacrylate graft copolymer and an ethylene-vinyl acetate-styrene-glycidyl methacrylate graft copolymer.

14. The thermoplastic resin composition of any one of claim 1 to claim 13, wherein the thermoplastic resin composition further comprises at least one additive selected from a nucleating agent, a coupling agent, filler, a plasticizer, a lubricant, a release agent, an antibacterial agent, a heat stabilizer, an antioxidant, an ultraviolet (UV) stabilizer, a flame retardant, an antistatic agent, an impact modifier, a dye, and a pigment.

15. A molded article comprising the thermoplastic resin composition of any one of claim 1 to claim 14.
